## Europäisches Patentamt

## European Patent Office

## Office européen des brevets

(19)

(11) Veröffentlichungsnummer: **0 149 021**
**B1**

(12) **EUROPÄISCHE PATENTSCHRIFT**

(45) Veröffentlichungstag der Patentschrift:
09.12.87

(51) Int. Cl.⁴: **B 64 C 27/33**, B 64 C 27/46

(21) Anmeldenummer: **84112477.9**

(22) Anmeldetag: **16.10.84**

(54) **Rotor, insbesondere eines Drehflügelflugzeugs.**

(30) Priorität: **19.01.84 DE 3401737**

(43) Veröffentlichungstag der Anmeldung:
**24.07.85 Patentblatt 85/30**

(45) Bekanntmachung des Hinweises auf die Patenterteilung:
**09.12.87 Patentblatt 87/50**

(84) Benannte Vertragsstaaten:
**DE FR GB**

(56) Entgegenhaltungen:
**GB - A - 2 001 025**
**GB - A - 2 015 956**

(73) Patentinhaber: **Messerschmitt-Bölkow-Blohm Gesellschaft mit beschränkter Haftung,
Robert-Koch-Strasse, D-8012 Ottobrunn (DE)**

(72) Erfinder: **Hahn, Michael, Bahnhofstrasse 15b,
D-8012 Ottobrunn (DE)**
Erfinder: **Friedberger, Otmar, Hauptstrasse 23,
D-8014 Neubiberg (DE)**
Erfinder: **Singer, Gerhard, St. Cajetanstrasse 4,
D-8000 München 80 (DE)**

ACTORUM AG

## Beschreibung

Die Erfindung betrifft einen Rotor gemäss dem Oberbegriff des Patentanspruchs 1.

Um bei einem derartigen z.B. durch die GB-A-2 001 025 bekannten Rotor durch eine Unterteilung der Hülle eine Inspektion des Blatthalsabschnittes auch bei angeschlossenem Rotorblatt zu ermöglichen, ist bei dem Rotor gemäss der DE-A-3 316 019 für ein blattflügelseitiges Hüllen-Aussenteil, um es nach dem Lösen vom blattwurzelseitigen Hüllen-Innenteil längs des Blatthalsabschnittes verschieben zu können, ein Profilquerschnitt gewählt, welcher ein Verschieben desselben über den Blattflügel ermöglicht. Wegen dieses Profilquerschnitts hat aber das Hüllen-Aussenteil wesentlich grössere Abmessungen als das Hüllen-Innenteil und macht damit die Hülle nicht nur relativ schwer, sondern führt auch zu einer Erhöhung des aerodynamischen (Blatt-)Widerstandes.

Der Erfindung liegt daher die Aufgabe zugrunde, bei einem Rotor der eingangs genannten Art für das Inspizieren des Blatthalsabschnittes des angeschlossen Rotorblattes ohne über dessen Blattflügel schiebbare Hüllenabschnitte auszukommen.

Diese Aufgabe ist gemäss dem Kennzeichen des Patentanspruchs 1 gelöst.

Durch die GB-A-2 015 956 ist zwar ein den Blatthalsabschnitt entlang berührungsfrei sich erstreckendes Blattbauteil bekannt, welches von einem den Blattflügel umfassenden Anschlussabschnitt aus bis zum anderen Ende ausser an der Vorderkante auch an der Hinterkante des Blatthalsabschnittes offen ist. Dieses Blattbauteil ist jedoch kein Blattsteuermittel, sondern ein als Hebel fungierendes Teil einer Blattschwenkdämpfungseinrichtung, wobei es nicht auf Torsionssteifigkeit des Blattbauteils, sondern auf Biegesteifigkeit desselben in Blattschwenkrichtung ankommt.

Demgegenüber setzt die Erfingung die Erkenntnis voraus, dass sich bei einer einteiligen Hüllenkonfiguration die aus dem teilweisen Öffnen des Querschnittsprofils resultierende Torsionssteifigkeitsminderung der Hülle ohne Schwierigkeiten durch die gekennzeichnete Verstärkung kompensieren lässt, vorzugsweise in der im Unteranspruch 2 gekennzeichneten Weise im Falle einer Hülle aus faserverstärktem Kunststoff mit einer Faserorientierung im wesentlichen von ± 45° zur Blattlängsachse.

Ausserdem lässt sich die Hülle gemäss der Erfindung zur weiteren Minderung von Fertigungsaufwand ohne weiteres mit dem Rotorblatt vereinigen, vorzugsweise in der im Unteranspruch 3 gekennzeichneten Weise.

Nachfolgend werden anhand eines Ausführungsbeispiels die Erfindung und deren bevorzugte Ausgestaltungen weiter erläutert. Hierzu zeigt die Zeichnung in

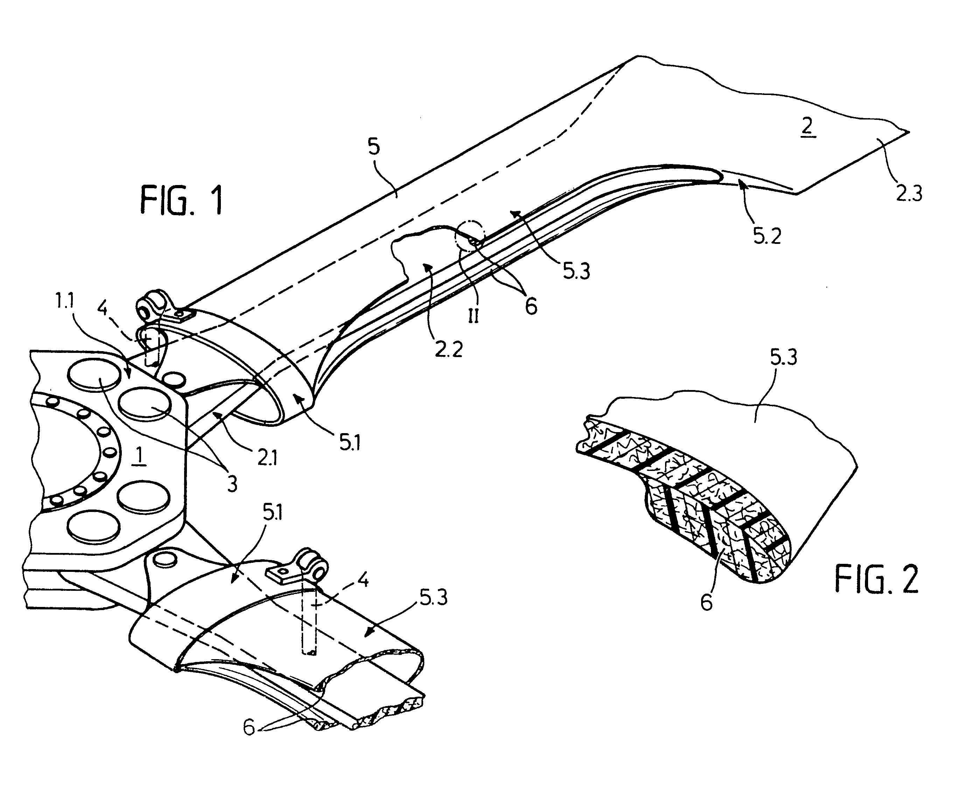

Fig. 1 perspektivisch einen Abschnitt einer Rotornabe bzw. den Anschlussbereich zweier Rotorblätter und

Fig. 2 eine vergrösserte Einzelheit im Bereich II der Fig. 1.

Eine Rotornabe 1 weist für jedes beispielsweise aus faserverstärktem Kunststoff bestehende Rotorblatt 2 bzw. dessen Blattwurzel 2.1 einen radial auswärts gerichteten gabelförmigen Rotornabenarm 1.1 auf, woran die Blattwurzel über zwei Bolzen 3, also unbeweglich angeschlossen ist. Folglich erfordert die Blatteinstellwinkelsteuerung Torsionsweichheit des Blatthalsabschnittes 2.2, weshalb hierfür ein relativ langgestreckter Aufbau z.B. aus Fasersträngen mit unidirektionaler Orientierung in Blattlängsrichtung gewählt ist.

Zur Blatteinstellwinkelverstellung des Blattflügels 2.3 mittels einer Steuerstange 4 ist um den Blatthalsabschnitt 2.2 berührungsfrei eine torsionssteife Blattsteuer-Hülle 5 angeordnet, die auch aus faserverstärktem Kunststoff besteht, wobei durch eine Faserorientierung von ± 45° zur Blattlängsachse eine hohe Torsionssteifigkeit bei relativ geringer Biegesteifigkeit erreicht ist. Bekanntlich lassen sich funktionsstörende Rückwirkungen von Auslenkungen des Blatthalsabschnittes 2.2 auf die Blatteinstellwinkelsteuerung durch das Vermeiden von Biegesteifigkeit der Hülle 5 ausschliessen.

Diese Hülle 5 ist einerseits mit der Blattwurzel 2.1 gelenkig und andererseits mit dem Blattflügel 2.3 starr verbunden. Dabei ist die Hülle 5 mit dem Blattflügel 2.3 bzw. dessen Haut zu einem einstückigen (Faserverbundkunststoff-)Körper zusammengefasst, beispielsweise durch gemeinsames Laminieren mit entsprechendem Fasergewebematerial. Um dennoch auch bei angeschlossenem Rotorblatt 2 eine Inspektion des Blatthalsabschnittes 2.2 durchführen zu können, weist die Hülle 5 zwischen einem blattwurzelseitigen und einem blattflügelseitigen Verbindungsabschnitt 5.1 bzw. 5.2 ein diesen gegenüber längs der Hinterkante des Blatthalsabschnitts 2.2 offenes Querschnittsprofil auf. Diese teilweise Öffnung der Hülle 5 mindert zwar deren Torsionssteifigkeit, was aber durch Materialverstärkungen 6 an der Hinterkante der Hülle 5 im wesentlichen aus in deren Längsrichtung sich erstreckenden Unidirektionalfastersträngen leicht kompensiert werden kann. Erforderlichenfalls können auch die in Umfangsrichtung geschlossenen Verbindungsabschnitte 5.1 und 5.2 der Hülle 5 verstärkt werden, beispielsweise der blattflügelseitige Verbindungsabschnitt 5.2 durch eine innenseitig umlaufende Rippe.

Es versteht sich, dass der Faserstoffaufbau der Hülle 5 je nach erforderlicher Torsions- und Biegesteifigkeit wählbar ist. So kann der die Hinterkante des Blatthalsabschnittes 2.2 freigebende Hüllenabschnitt 5.3 auch vorwiegend aus in Hüllenerstreckungsrichtung orientierten Fasern bzw. Fasersträngen aufgebaut und können dabei die beiden Verbindungsabschnitte 5.1 und 5.2 durch in Umfangsrichtung gewickelte Faserstränge bandagiert sein bis zu völliger Steifigkeit, so dass für die jeweils gewünschte Biegeweichheit der Hülle 5 nur noch deren mittlerer Hüllenabschnitt 5.3 massgeblich ist.

Wie sich gezeigt hat, ist die teilweise Öffnung der Hülle 5 bei Zuhilfenahme von üblichen Winkelspiegeleinrichtungen völlig ausreichend für die allseitige Inspektion des Blatthalsabschnittes 2.2.

## Patentansprüche

1. Rotor, insbesondere eines Drehflügelflugzeuges, mit einem oder mehreren radial auswärtsgerichteten Rotornabenarmen jeweils für den Anschluss eines Rotorblattes, das einen für die Blatteinstellwinkelbewegungen torsionsweichen Blatthalsabschnitt zwischen der Blattwurzel und dem Blattflügel aufweist, wobei die Blatteinstellwinkelverstellung über eine den Blatthalsabschnitt entlang berührungsfrei sich erstreckende, einerseits mit der Blattwurzel gelenkig und andererseits mit dem Blattflügel starr verbundene, torsionssteife Hülle erfolgt, dadurch gekennzeichnet, dass die Hülle (5) beschränkt auf einen Längenabschnitt zwischen einem blattwurzelseitigen und einem blattflügelseitigen Verbindungsabschnitt (5.1 bzw. 5.2) ein längs der Hinterkante des Blatthalsabschnitts (2.2) offenes Querschnittsprofil aufweist mit einer Materialverstärkung (6) seiner offenen Hinterkante.

2. Rotor nach Anspruch 1, wobei die Hülle aus faserverstärktem Kunststoff mit einer Faserorientierung im wesentlichen von ± 45° zur Blattlängsachse besteht, dadurch gekennzeichnet, dass die Materialverstärkung (6) Faserstränge unidirektionaler Orientierung in Hüllenerstreckungsrichtung bilden.

3. Rotor nach Anspruch 1 oder 2, dessen Rotorblätter im wesentlichen aus faserverstärktem Kunststoff bestehen, dadurch gekennzeichnet, dass die Hülle (5) mit dem Blattflügel (2.3) bzw. dessen Haut zu einem einstückigen (Faserverbundkunststoff-) Körper zusammengefasst ist.

## Claims

1. A rotor, more especially of a rotary-wing aircraft, having one or more radially outwardly directed rotor hub arms, in each case for the connection of a rotor blade, which has, between the blade root and the blade wing, a blade neck portion which is torsionally yielding for blade angle-of-incidence movements, in which respect the blade angle-of-incidence adjustment is effected by way of a torsionally stiff sheath which extends along the blade neck portion in a contact-free manner and which is connected on the one hand hingedly to the blade root and on the other hand rigidly to the blade wing, characterised in that, along its span between a blade-root-sided and a blade-wing-sided connecting portion (5.1 and 5.2 respectively), the sheath (5) has a cross-sectional profile which is open along the trailing edge of the blade neck portion (2.2) and which has a material reinforcement (6) of its open trailing edge.

2. A rotor according to claim 1, wherein the sheath consists of fibre-reinforced plastics material having a fibre orientation substantially of ± 45° with respect to the longitudinal axis of the blade, characterised in that the material reinforcement (6) forms fibre strands of unidirectional orientation in the direction of extent of the sheath.

3. A rotor according to claim 1 or 2, the rotor blandes of which consist substantially of fibre-reinforced plastics material, characterised in that the sheath (5) is combined with the blade wing (2.3) or respectively the skin thereof to form a one-piece (fibre composite plastics material) body.

## Revendications

1. Rotor, en particulier d'un appareil à voilure tournante, comprenant un ou plusieurs bras dirigés radialement vers l'extérieur pour le raccordement respectif d'une pale, laquelle comporte une section de col sensible à la torsion entre le pied et le corps de la pale pour les déplacements angulaires de la pale, la variation du pas des pales étant assurée par un manchon rigide à la torsion s'étendant sans contact le long de la section du col et raccordé, d'une part, de façon articulée, au pied de la pale et, d'autre part, de façon rigide, au corps de celle-ci, caractérisé par le fait que le manchon (5) présente un profil de section transversale qui est ouvert le long de l'arête arrière de la section (2.2) du col de la pale sur une section longitudinale limitée s'étendant entre une section de raccordement (5.1), côté pied de pale, et une section de raccordement (5.2), côté corps de pale, et qui comporte un renforcement (6) du matériau de son arête arrière ouverte.

2. Rotor selon la revendication 1, dans lequel le manchon est réalisé en matière plastique renforcée de fibres avec orientation des fibres sensiblement de ± 45° par rapport à l'axe longitudinal de la pale, caractérisé par le fait que le renforcement (6) du matériau forme des écheveaux de fibres d'orientation unidirectionnelle dans le sens de la longueur du manchon.

3. Rotor selon la revendication 1 ou 2, dont les pales sont réalisées pour l'essentiel en matière plastique renforcée de fibres, caractérisé par le fait que le manchon (5) et le corps (2.3) de la pale ou la peau de celui-ci, sont réunis en un corps d'une seule pièce (corps en matériau composite fibreux).

FIG. 1

FIG. 2